# EUROPÄISCHE PATENTSCHRIFT

(11) **EP 3 527 075 B1**
(45) Veröffentlichungstag und Bekanntmachung des Hinweises auf die Patenterteilung: **23.07.2025**
(21) Anmeldenummer: 19156594.4
(22) Anmeldetag: 12.02.2019
(51) Int. Cl.: A01M 27/00, A01D 51/00, E01H 1/12

(54) **AUFSPIESSVORRICHTUNG**
SKEWERING DEVICE
DISPOSITIF D'EMBROCHEMENT

(30) Priorität: 14.02.2018 DE 102018103276
(43) Veröffentlichungstag der Anmeldung: 21.08.2019
(73) Patentinhaber: Götz, Ingrid, 85661 Forstinning (DE); Götz, Thomas H., 81241 München (DE); Götz, Marco, 85661 Forstinning (DE)
(72) Erfinder: Götz, Ingrid, 85661 Forstinning (DE); Götz, Thomas H., 81241 München (DE); Götz, Marco, 85661 Forstinning (DE)
(74) Vertreter: Seifert, Ruth

(56) Entgegenhaltungen:
- DE-U1- 202016 105 680
- ES-U- 1 077 408
- US-A1- 2005 082 854

## Beschreibung

Die vorliegende Erfindung betrifft eine Aufspießvorrichtung zum Aufspießen von Objekten, insbesondere von Schnecken, im Freien. Als Objekte seien nachstehend sämtliche, gegenständlichen Materialien gemeint, die mit der Vorrichtung aufgespießt werden können, worunter vorzugsweise auch heruntergefallenes Laub, Papier und Unrat zu fassen ist. Die Vorrichtung ist bestens geeignet für alle unebenen Freiflächen, wie beispielsweise Rasen, Beete, Gewächshäuser und Waldboden. Weiterhin kann durch das Sammeln der Schnecken mit dieser Vorrichtung und Entsorgen der gesammelten Schnecken, Schneckenfraß verhindert werden.

Als Ursachen für die Zunahme des Schneckenproblems, sind die Reduktion der natürlichen Feinde der Schnecken, die Klimaerwärmung, das Mulchen von Beeten und Rasensprengen und veränderte Erwerbsanbaumethoden zu nennen. Weitere Ursachen sind, dass liegengebliebene tote Schnecken weiter Schnecke anziehen und dass die robuste "Spanische Wegschnecke" ihr Erbmaterial extrem schnell verbreitet.

Um die Probleme der zunehmenden Schneckenpopulation ökologisch zu bekämpfen wird die erfinderische Vorrichtung eingesetzt und dadurch zum einen die Anzahl der Schnecken reduziert und zum anderen ein gesundes Pflanzenwachstum gefördert, insbesondere von Setzlingen, da diese besonders anfällig für Schnecken sind. Zusätzlich wird die Sauberkeit von Freiflächen erhöht, da neben den Schnecken auch weitere Verunreinigungen, wie Laub, Papier oder Unrat, am Boden aufgesammelt werden können.

Gemäß dem Stand der Technik sind bereits zahlreiche Verfahren und Methoden zur Entfernung von Schnecken auf biologischer, chemischer oder mechanischer Art bekannt.

In der Offenlegungsschrift WO 2011/020871 wird eine Sammelvorrichtung für Schnecken offenbart, umfassend ein längenverstellbares Teleskoprohr und einen Sammelbehälter der an der Unterseite offen ist. Eine zusätzliche Ausschubplatte, durch die die Spieße hindurchlaufen, ermöglicht die Entleerung der Spieße von gesammelten Schnecken. Die Ausschubplatte kann mit einer Rückstellfeder und einem Fixierbügel am Teleskoprohr befestigt werden.

Nachteilig an dieser Ausführung sind, die umständliche Bedienung der Feder, sowie die Rückschläge der Feder die zu Erschütterungen der gesamten Vorrichtung und insbesondere des Federmechanismus führen. Zusätzlich wird die Sicht auf die Objekte und der Einsatz auf unebenen Flächen durch den Sammelbehälter eingeschränkt. Auch eine Anwendung in der Dämmerung oder in der Dunkelheit ist schwer möglich. Der Austausch der Stifte im Fall eines Bruchs oder Verbiegens ist mit einigem Aufwand verbunden.

US 2005/0082854 A1 offenbart eine Abfallaufnahmevorrichtung, die aus zwei Teilen besteht, wobei ein Aufnahmewerkzeug mit einem Behälter zusammenwirkt. Ein festes Rohr ist in einem Hohlrohr angeordnet, um eine Pendelplatte, die mit dem festen Rohr verbunden ist, über Stacheln zu schieben, wobei die Stacheln an einer festen Platte an dem Hohlrohr befestigt sind. Die Pendelplatte greift in Arretierungen ein, die im Inneren eines Behälters vorgesehen sind. Eine Feder drückt die Pendelplatte nach oben gegen die Arretierungen und den Boden der festen Platte nach unten gegen den Rand des Behälters, so dass der Behälter und das Aufnahmewerkzeug miteinander verklemmt werden. Durch den Aufbau des Aufnahmewerkzeugs ist somit ein Zusammenwirken mit einem Behälter erforderlich.

DE 20 2016 105 680 U1 offenbart eine Vorrichtung zur Bekämpfen von Tieren und Objekten, wobei die Vorrichtung eine Reihe von an einem Ende eines stangenartigen Haltegriffs angeordneten und im Wesentlichen in Längsrichtung des Haltegriffs mindestens einen ausgerichteten, spieß- oder nadelartigen Stift aufweist. Die Stifte sind an einem mittels einer Stange in Längsrichtung des Haltegriffs verschieblich betätigbaren Halter angeordnet, wobei ein Abstreiforgan vorgesehen ist, mittels dem ein oder mehrere mittels der Stifte aufgespießte Tier oder Objekt durch Betätigung des Halters von den Stiften abgestreift werden können.

Der vorliegenden Erfindung liegt die Aufgabe zu Grunde, eine Vorrichtung zu schaffen, welche die vorgenannten Probleme ausräumt und welche geeignet ist, Objekte auf einfache und bequeme und komfortable Art und Weise aufnehmen zu können, und deren Lebensdauer erhöht ist.

Erfindungsgemäß wird die voranstehende Aufgabe gemäß Patentanspruch 1 gelöst. Vorteilhafte Ausgestaltungen und Weiterbildungen der erfindungsgemäßen Vorrichtung sind in den abhängigen Unteransprüchen und Figuren angegeben.

Die Vorrichtung soll weiterhin für unebene Flächen gut geeignet sein. Zusätzlich soll eine gute Sicht, auch in der Dämmerung oder bei Dunkelheit, auf die Objekte ermöglicht werden. Mit Hilfe der Vorrichtung sollen Objekte, bevorzugt Nacktschnecken effizient und sicher gesammelt und entsorgt werden können. Weiterhin soll bei der Bedienung der Vorrichtung die Verletzungsgefahr möglichst minimiert bzw. ausgeschlossen werden. Zusätzlich soll das Sammeln und Entsorgen der Objekte automatisiert mit einer Hand erfolgen können.

Die Effizienz wird dadurch gewährleistet, dass mehrere Objekte, bevorzugt Schnecken nacheinander aufgespießt werden können, dass diese besonders gut durch die Stifte festgehalten werden und deshalb ein Abstreifen der Objekte und /oder Schnecken erst nach mehreren Sammelvorgängen nötig ist. Dazu ist auch kein direkter händischer Kontakt mit den Objekten, bevorzugt Nacktschnecken oder der Einsatz von Schneckengift erforderlich. Durch die Verwendung einer Druckfeder erfolgt ein vollständiges Abstreifen der Objekte mit Druck und durch eine Dämpfungsfeder werden Rückschläge der Druckfeder auf die Vorrichtung gedämpft um somit Erschütterungen oder Belastungen der Vor richtung minimiert oder ausgeschlossen.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Vorrichtung sind in den abhängigen Unteransprüchen und Figuren angegeben.

Die Begriffe Aufspießvorrichtung und Vorrichtung sind in der gesamten Anmeldung als gleichbedeutend zu verstehen.

### Zusammenfassung der Erfindung

Die Erfindung betrifft eine Aufspießvorrichtung zum Aufspießen von Objekten, insbesondere von Schnecken, gemäß Anspruch 1. Die Vorrichtung, insbesondere zum Sammeln von Schnecken, zeichnet sich durch einfache Handhabung aus. Ein Vorteil für die Umwelt und damit für ökologische Landwirtschaft und ökologischen Gartenbau ist die Wirkungsweise ohne Energie oder chemische Hilfsstoffe. Mit der Vorrichtung können Verunreinigungen oder Schnecken aufgesammelt und entsorgt werden, indem diese aufgespießt werden.

Der Federmechanismus dient zur automatisierten und komfortablen Handhabung der Vorrichtung. Der Vorteil der Dämpfungsfeder ist, dass ihre Federkraft ein oder mehrere Rückschläge der Druckfeder dämpft. Andernfalls würden die Rückschläge der Druckfeder die Vorrichtung, insbesondere den Federmechanismus belasten.

In einer bevorzugten Ausführungsform der erfindungsgemäßen Vorrichtung heben sich in der zweiten Position die Federkraft der Dämpfungsfeder und die Federkraft der Druckfeder auf. Diese Position wird in dieser Anmeldung als Ruheposition bezeichnet.

Die erfindungsgemäße Vorrichtung ist an der Stange ein erstes festes Anschlagselement vorgesehen, das fest an der Stange befestigt ist und einen feststehenden ersten Druckfederanschlag ausbildet, und an der Stange ist ein zweites festes Anschlagselement vorgesehen, das fest an der Stange befestigt ist und einen feststehenden ersten Dämpfungsfederanschlag ausbildet, und weiterhin ist ein relativ zur Stange bewegliches Anschlagselement vorgesehen, das von einer ersten, die erste Stiftposition festlegenden Anschlagselementposition in eine zweite, die zweite Stiftposition festlegenden Anschlagselementposition bewegbar ist, und einen zweiten Druckfederanschlag und einen zweiten Dämpfungsfederanschlag ausbildet. Zusätzlich dient in einer weiteren bevorzugten Ausführungsform der erfindungsgemäßen Vorrichtung das bewegliche Anschlagselement zur Trennung der Druckfeder von der Dämpfungsfeder und /oder zur Druckeinstellung beider Federn und.

In einer alternativen bevorzugten Ausführungsform der erfindungsgemäßen Vorrichtung ist das bewegliche Anschlagselement fest mit einem Betätigungsmittel verbunden, wobei das Betätigungsmittel dazu ausgelegt ist, das bewegliche Anschlagselement zu bewegen.

In einer weiteren bevorzugten Ausführungsform der erfindungsgemäßen Vorrichtung ist ein Arretierungsmittel vorgesehen um das bewegliche Anschlagselement in der ersten Position zu arretieren. Der Vorteil des Arretierungsmittels ist, dass die entsprechenden Positionen fixiert werden können. Vorzugsweise ist das Arretierungsmittel ein Arretierungsstift.

In einer bevorzugten Ausführungsform der erfindungsgemäßen Vorrichtung ist weiterhin ein Auslösemittel vorgesehen, das die Arretierung des beweglichen Anschlagselements löst, wobei vorzugsweise das Arretierungsmittel und das Auslösemittel zusammenwirken. Vorzugsweise ist das Auslösemittel das Betätigungsteil. Besonders bevorzugt ist am Betätigungsteil das Arretierungsmittel, bevorzugt der Arretierungsstift befestigt. In einer noch bevorzugten Ausgestaltungsform der Vorrichtung ist das Betätigungsteil federbelastet, bevorzugt mit einer Rückstellfeder. Bevorzugt wird nach Betätigen des Betätigungsteils, beispielsweise durch Drücken des Betätigungsteils, der mindestens eine Stift mittels der Druckfeder von einer ersten vorgespannten Stiftposition in eine zweite Stiftposition bewegt.

Weiterhin ist die Stange in einem Führungselement aufgenommen, wobei die Stange und das Führungselement relativ zueinander verschiebbar sind, und wobei das Führungselement als Betätigungsmittel ausgebildet ist, so dass über die Relativbewegung zwischen Führungselement und Stange der mindestens eine Stift in die erste Stiftposition vorspannbar ist.

In einer bevorzugten Ausführungsform der erfindungsgemäßen Vorrichtung sind die Stange und das Führungselement hohlzylindrisch ausgeführt und die Druckfeder und die Dämpfungsfeder innerhalb der Stange angeordnet. Der Vorteil, dass der Federmechanismus innerhalb der Stange eingebaut ist, ist das die Federn und beispielsweise vor Verunreinigungen geschützt sind und auch der Benutzer vor Verletzungen durch die Federn und geschützt ist.

In einer weiteren bevorzugten Ausführungsform der erfindungsgemäßen Vorrichtung ist die Druckfeder und/oder die Dämpfungsfeder lose zwischen dem ersten und/oder dem zweiten feste Anschlagselement und dem beweglichen Anschlagselement angeordnet oder fest mit dem ersten und/oder dem zweiten feste Anschlagselement und dem beweglichen Anschlagselement verbunden.

Ein bevorzugter Teil der erfindungsgemäßen Vorrichtung ist der Abstreifkopf. In einer alternativen bevorzugten Ausführungsform der erfindungsgemäßen Vorrichtung ist ein Abstreifkopf vorgesehen, mit mindestens eine Aussparungen, in der der mindestens eine Stift geführt und zumindest teilweise aufgenommen ist, wobei der Abstreifkopf mit der Stange und/oder dem Führungselement zusammenwirkt, so dass bei einer Bewegung des mindestens einen Stifts von der ersten Position in die zweite Position, die Aussparung an dem mindestens einen Stift gleitet.

Bevorzugt ist der Durchmesser der Aussparungen minimal größer, als der Durchmesser der Stifte, um ein leichtgängiges Verschieben der Stifte zu gewährleisten. In einer vorteilhaften Ausgestaltungsform der Vorrichtung ist der Durchmesser der Aussparungen im Abstreifkopf größer, vorzugsweise nicht größer als maximal 10 % des Durchmessers der Stifte selbst. Der Durchmesser der Aussparungen im Abstreifkopf sollte deshalb möglichst klein gewählt werden, da dadurch zum einen die Stifte besonders gut gesäubert werden und zum anderen keine Verunreinigungen durch den Abstreifkopf zwischen die Stifte gelangen können. In einer bevorzugten Ausgestaltungsform der Vorrichtung ist der Abstreifkopf aus Kunststoff. Dies hat den Vorteil, dass der Reinigungseffekt der Stifte besonders gut ist.

In einer bevorzugten Ausführungsform der erfindungsgemäßen Vorrichtung wird der mindestens eine Stift bis in die Ruheposition verschoben, wobei die mindestens eine Stiftspitzen im Abstreifkopf aufgenommen ist. Der Abstreifkopf dient in diesem Fall einerseits dazu, den mindestens einen Stift vor Verbiegen oder Bruch zu schützen und andererseits den Benutzer oder andere Personen vor Verletzungen zu schützen. In dieser Ruheposition kann die Vorrichtung besonders gegen Beschädigung der Vorrichtung und/oder Verletzungen gesichert gelagert und transportiert werden.

Vorteilhaft sind bei einer gattungsgemäßen Vorrichtung die freien Stiftspitzen zugespitzt. Die Stiftspitzen können beispielsweise gleichmäßig kegelförmig zugespitzt und/ oder schräg geschliffen sein. Durch die zugespitzte Ausführung der freien Stiftspitzen können verschiedene Objekte, insbesondere Nacktschnecken mit der Vorrichtung ohne Kraftanstrengung gesammelt und festgehalten werden.

In einer weiteren Ausführungsform zur Lösung der erfindungsgemäßen Aufgabe ist der mindestens eine Stift pyramidenförmig ausgebildet, wobei vorzugsweise mindestens eine Kante des pyramidenförmigen Stifts als Schneidkante ausgebildet ist. Durch die Pyramidenform des mindestens einen Stifts wird das Wiederabrutschen von aufgespießten Objekten verhindert und die Objekte besonders gut auf den Stiften festgehalten. Die Schneidkante bewirkt beispielsweise einen schnellen und sicheren Tod der Schnecken.

Die Anzahl der Stifte kann stark variieren. Je nach Verwendungszweck ist es sinnvoll die Anzahl der Stifte dem Verwendungszweck anzupassen. Da die Stifte leicht ausgetauscht werden können ist es auch möglich die Anzahl der Stifte und/oder die Ausgestaltung des Abstreifkopfs der Verwendung anzupassen. Selbstverständlich kann die gesamte Einheit umfassend Stifte und Abstreifkopf als Gesamtelement ausgetauscht bzw. an die Anwendung angepasst werden. In einer alternativen bevorzugten Ausführungsform der erfindungsgemäßen Vorrichtung zum Sammeln von Schnecken, insbesondere für Nacktschnecken, beträgt die Anzahl der Stifte 11 bis 50, insbesondere bevorzugt 16 bis 26. Diese Anzahl hat sich als besonders geeignet erwiesen um möglichst viele Schnecken in einem Sammelvorgang aufzunehmen und vor dem Wiederabrutschen zu schützen. Im Rahmen der Erfindung ist es auch möglich, die Vorrichtung zum Sammeln von spießbaren Objekten, beispielsweise von Laub oder von Abfall, einzusetzen. In einer bevorzugten Ausführungsform der erfindungsgemäßen Vorrichtung zum Sammeln von Papier oder Unrat, beträgt die Anzahl der Stifte 1 bis 10, insbesondere bevorzugt 3 bis 5. Für größere Objekte hat sich eine geringere Anzahl an Stiften als geeignet herausgestellt.

Durch die Anordnung der Stifte, sowie durch die geeignete Wahl des Abstands der Stifte können unterschiedlich große Objekte oder bevorzugt Nacktschnecken festgehalten werden. Die Anordnung erfolgt bevorzugt gleichmäßig.

In einer weiteren bevorzugten Ausführungsform der erfindungsgemäßen Vorrichtung werden die Stifte in einem gleichen Abstand, parallel zueinander angeordnet.

Zweckmäßig entspricht bei einer erfindungsgemäßen Vorrichtung die Länge der Stifte mindestens 20 bis 100 Millimeter (mm), insbesondere bevorzugt 50 bis 90 mm. Für Schnecken werden insbesondere 90 mm bevorzugt. Der Vorteil der längeren Stifte ist, dass viele Schnecken in einem einzigen Sammelvorgang ohne wiederholtes Abstreifen in einen Sammelbehälter gesammelt werden können.

Mit Hilfe der mehreren und /oder durch die Länge und/oder die Pyramidenform der Stifte können mehrere Objekte oder Nacktschnecken auf einmal bzw. in einem einzigen Sammelvorgang (ohne wiederholtes Abstreifen in einen Sammelbehälter) besonders komfortabel gesammelt und festgehalten werden. Die Stifte müssen erst wenn sie vollständig befüllt sind durch den längs der Stifte verschiebbaren Abstreifkopf von den gesammelten Objekten oder Nacktschnecken durch das automatisierte, mechanische Abstreifen entleert werden. Eine händische Berührung der Objekte oder Nacktschnecken während des Sammelns entfällt dabei vollständig.

In einer weiteren bevorzugten Ausführungsform der erfindungsgemäßen Vorrichtung ist der Durchmesser der Stifte 2 bis 4 mm. Im Fall von Schnecken wird insbesondere ein Durchmesser von 2,5 bis 3 mm bevorzugt. Dieser Durchmesser hat sich als vorteilhaft zum Aufnehmen der Schnecken erwiesen. Bei härteren Objekt, wie beispielsweise Papier wird insbesondere ein Durchmesser von 3,5 bis 4 mm bevorzugt. Der größere Durchmesser eignet sich für härteren und /oder größeren Objekten besonders gut, da dadurch die Stifte vor dem Verbiegen oder Brechen geschützt sind.

In einer bevorzugten Ausführungsform der erfindungsgemäßen Vorrichtung ist der mindestens eine Stift an einer Halteplatte, die an der Stange befestigt ist, angeordnet.

In einer weiteren bevorzugten Ausführungsform der erfindungsgemäßen Vorrichtung ist der mindestens eine Stift an einem Halterungskopf der an der Halteplatte befestigt ist, angeordnet.

Auch die Form des von Stiftspitze abgewandten Endes kann beispielsweise mit einem Nagelkopf ausgeführt werden. In einer bevorzugten Ausführungsform der erfindungsgemäßen Vorrichtung sind die Stifte an seinem von der Stiftspitze abgewandten Ende mit einem Nagelkopf versehen. Der Nagelkopf wird bevorzugt zwischen Halterungsplatte und Halterungskopf befestigt. Diese hat den Vorteil, dass die Stifte einfach ausgetauscht werden können, um ihre Anzahl dem Verwendungszweck anzupassen oder verbogene oder stumpfe Stifte zu ersetzen.

Um einen Austausch der Stifte möglichst einfach und schnell durchführen zu können, ist auch die Art der Befestigung der Halterungsplatte und des Halterungskopfs an der Stange von Bedeutung. In einer vorteilhaften Ausgestaltungsform der Vorrichtung ist der Halterungskopf an seinem der Stiftspitze abgewandten Ende mit einer Verschraubung mit der Halterungsplatte und der Stange lösbar verbunden. Eine bevorzugte Verschraubung ist beispielweise eine Verbindungsschraube mit Durchgangsbohrung in der Halterungsplatte und im Halterungskopf, die Stange mit der Halterungsplatte, dem Halterungskopf zusammen mit den Stiften und dem Abstreifkopf verbunden werden kann. Dazu eignet sich insbesondere ein Gewindestift.

In einer bevorzugten Ausführungsform der erfindungsgemäßen Vorrichtung können die Stifte, durch Lösen der Halterungsplatte von der Verschraubung vom Halterungskopf getrennt werden. Durch anschließendes Herausnehmen des Stiftes aus dem Halterungskopf und Befestigen eines neuen Stiftes, erfolgt der reversible Austausch. Dies ist vorteilhaft, da die Stifte verbogen oder auch stumpf werden können.

In einer weiteren bevorzugten Ausgestaltungsform der Vorrichtung ist ein Auswurfanschlag vorgesehen. Dieser wird durch den Abstreifkopf verschoben. In der ersten Stiftposition befindet sich der Auswurfanschlag in der von der Halterungsplatte entferntesten Stellung. Wird die Stange in die Richtung Ruheposition geschoben wird gleichzeitig der Auswurfanschlag in Richtung der oberen Kante der Verbindungsschraube bewegt. Ist die Ruheposition erreicht stößt der Auswurfanschlag an der oberen Kante der Verbindungsschraube an. Durch den Auswurfanschlag wird verhindert, dass die Gewindeschraube weiter in diese Richtung bewegt werden kann und dadurch sich der Abstreifkopf von den Stiften lösen könnte.

Des Weiteren kann in einer bevorzugten Ausgestaltungsform der Vorrichtung am Führungselement eine Fixiereinheit, bestehend aus einer Fixierschraube und Fixierplatten zur Regulierung des jeweiligen Drucks der Druckfeder und/oder der Dämpfungsfeder vorgesehen sein. Mit der Fixierschraube kann sowohl die Druckfeder als auch die Dämpfungsfeder unabhängig voneinander in verschiedenen Positionen fixiert werden und dadurch der Druck eingestellt werden. In einer bevorzugten Ausführung umfasst das bewegliche Anschlagselement Aussparungen durch die die Fixierschraube geführt werden kann. Die Fixierplatten dienen zum einen zum Aufnehmen der Fixierschraube, zum anderen zum Festklemmen des beweglichen Anschlagselements. Zusätzlich wird durch die Fixierplatten vermieden, dass Schmutz durch die Aussparungen in die Stange gelangt.

In einer weiteren bevorzugten Ausgestaltungsform der Vorrichtung ist die Stange rund ausgeführt und umfasst einen Durchmesser von 10 bis 30 mm, bevorzugt von 15 bis 25 mm.

Das Führungselement kann in verschiedenen Formen, wie beispielsweise dreiflächig, quaderförmig oder rund ausgeführt werden. In einer alternativen, bevorzugten Ausführungsform der erfindungsgemäßen Vorrichtung, ist das Führungselement rund ausgeführt und umfasst einen Durchmesser von 20 bis 50 mm, bevorzugt von 25 bis 40 mm. Dies hat den Vorteil, dass dem Benutzer eine besonders gute Sicht auf die Objekte ermöglicht wird, da keine Sammelbehälter oder das Führungselement das Sichtfeld auf die Objekte oder Schnecken einschränkt und das Führungselement für den Benutzer eine angenehme Haptik besitzt.

In einer weiteren Ausführungsform zur Lösung der erfindungsgemäßen Aufgabe weist die Vorrichtung ein Führungselement mit einer benutzerfreundlichen Länge bzw. angenehmen Arbeitshöhe von 800 bis 1000 mm, bevorzugt 900 mm auf. Durch eine geeignete Führungselementlänge ist kein Bücken mehr notwendig, um Objekte, bevorzugt Schnecken zu entfernen.

Eine besonders zweckmäßige Ausführungsform einer erfindungsgemäßen Vorrichtung ist dadurch gekennzeichnet, dass die Stange einen endseitigen Handgriff umfasst. Dieser Handgriff kann mit einer Verschraubung mit der Stange lösbar verbunden sein. Zusätzlich kann der Handgriff an seinem freien Ende beispielsweise besonders ergonomisch und für eine längere Benutzung gestaltet sein. Denkbare Ausführungsformen für Handgriffe umfassen beispielsweise mehrkantige, kugelförmige, kegelförmige Griffe, Bügelgriffe und T-Griffe. Eine bevorzugte Ausführungsform des Handgriffs ist ein runder Kugelknopf.

Besonders komfortabel ist die erfindungsgemäße Vorrichtung bei der das Betätigungsteil am Führungselement und der Handgriff an der Stange derart angeordnet und ausgebildet sind, so dass das Betätigungsteil und der Handgriff mit einer Hand betätigt werden können.

Vorteilhaft ist weiterhin eine Ausgestaltung der erfindungsgemäßen Vorrichtung, bei der durch Betätigung des Betätigungsteils, sobald auf den Stiften ein oder mehrere Objekte oder beispielsweise Nacktschnecken aufgespießt sind, sich die Stifte längs des Abstreifkopfs bewegen und die Stifte dabei entleert und gleichzeitig gereinigt werden. Danach befinden sich die Stifte bevorzugt in der Ruheposition - in der alle Stiftspitzen mit der Unterkante des Abstreifkopfs abschließen.

In einer bevorzugten Ausgestaltungsform der Vorrichtung wird die erste vorgespannte Stiftposition dadurch erreicht, dass bevorzugt durch den Benutzer durch Verschieben der Stange die Unterseite des Halterungskopfs bündig gegen die Oberseite des Abstreifkopfs gedrückt, und gleichzeitig die Druckfeder zusammengedrückt wird. Zur Stabilisierung der Aktivposition wird der Arretierungsstift in die Arretierungsöffnung in der Stange eingehakt. Somit steht in der ersten vorgespannten Stiftposition die gesamte Stiftlänge zur Aufnahme von Objekten, bevorzugt von Nacktschnecken zur Verfügung.

Besonders zweckmäßig weist die erfindungsgemäße Vorrichtung eine Beleuchtungsvorrichtung, bevorzugt im unteren Drittel des Führungselements auf. Bei der Beleuchtungsvorrichtung kann es sich um eine aufladbare Beleuchtungsvorrichtung handeln, mit einer oder mehrere LEDs. In einer bevorzugten Ausführungsform ist die Beleuchtungsvorrichtung mit einer Klemmvorrichtung am Führungselement befestigt. Diese Beleuchtungsvorrichtung hat den Vorteil das Objekte, bevorzugt Nacktschnecken in der Dämmerung oder in der Dunkelheit gesammelt werden können.

Vorteilhaft ist eine erfindungsgemäße Vorrichtung zumindest teilweise aus Metall, vorzugsweise aus einem rostfreien Metall, insbesondere bevorzugt aus eloxiertem Aluminium hergestellt. Durch das eloxierte Aluminium kann das Gesamtgewicht der Vorrichtung reduziert werden. Die Stifte der Vorrichtung können dazu beispielsweise gehärtete Stahlstifte oder aus rostfreiem Draht oder Edelstahl hergestellt sein. Somit ist eine längere Lebensdauer der Stifte gewährleistet. Die Vorrichtung ist vorzugsweise aus Korrosion beständigem Material gefertigt. In einer bevorzugten Ausführungsform der Vorrichtung ist die Halterungsplatte, der Halterungskopf und der Abstreifkopf aus Kunststoff. Dies hat den Vorteil, dass das Gewicht der Vorrichtung reduziert wird und gleichzeitig die Stifte in den Aussparungen leichter gleiten.

In den Zeichnungen zeigen jeweils in schematischen Darstellungen:
Fig. 1 eine erfindungsgemäße Vorrichtung (1) zum Sammeln von Objekten, bevorzugt Schnecken in einer Ansicht von der Seite in der Aktivposition, wobei die Länge des Führungselements (4) verkürzt dargestellt ist um die ganze Vorrichtung (1) auf einer Seite abbilden zu können. Die Beleuchtungsvorrichtung (19) ist optional.
Fig. 2 eine erfindungsgemäße Vorrichtung (1) zum Sammeln von Objekten bzw. Schnecken in einer Ansicht von der Seite in der Ruheposition, wobei die Länge des Führungselements (4) verkürzt dargestellt ist um die ganze Vorrichtung (1) auf einer Seite abbilden zu können.
Fig. 3 den in Fig. 1 unten dargestellte Teil C einer erfindungsgemäßen Vorrichtung (1) in einer Ansicht von der Seite in der ersten vorgespannten Stiftposition.
Fig. 4 den in Fig. 2 unten dargestellte Teil C einer erfindungsgemäßen Vorrichtung (1) in einer Ansicht von der Seite in der Ruheposition.
Fig. 5 den in Fig. 4 dargestellten Abstreifkopf (7) in einer Ansicht von unten.
Fig. 6 die in Fig. 4 dargestellte u. g. Ausschubeinheit in einer Schnittansicht von der Seite.
Fig. 7 der in Fig. 6 vergrößert dargestellter unterer Teil eines Stifts (10) mit Stiftspitze in einer Schnittansicht von der Seite.
Fig. 8 der in Fig. 7 vergrößert dargestellter Stift (10) mit Stiftspitze in einer Schnittansicht von oben.
Fig. 9 den mittlere Teil B der erfindungsgemäßen Vorrichtung (1) in einer Schnittansicht von der Seite, wobei sich die Vorrichtung in ihrer Ruheposition befindet.
Fig. 10 die um 90° gedrehte Schnittansicht von der Seite der inneren Stange (6) aus der Figur 9, mit den Aussparungen (29) im beweglichen Anschlagselement (18) für die Aufnahme der Fixierschraube (28).
Fig.11 die Schnittansicht von der Seite des Führungselements (4) aus der Figur 9 mit den Aussparungen (23) im Führungselement (4) für die Aufnahme der Fixierschraube (28).
Fig. 12 die Schnittansicht von der Seite des Führungselements (4) aus der Figur 9 mit einer Fixierplatte (13) und dem Kopf der Fixierschraube (28).
Fig. 13 den oberste Teil A der erfindungsgemäßen Vorrichtung (1) in einer Schnittansicht von der Seite.
Fig. 14 die Beleuchtungsvorrichtung (19) in einer Ansicht von der Seite.
Fig. 15 die Beleuchtungsvorrichtung (19) in einer Ansicht von oben.

In den folgenden Figuren sind gleich oder gleichwirkende Elemente mit den gleichen Bezugszeichen gekennzeichnet.

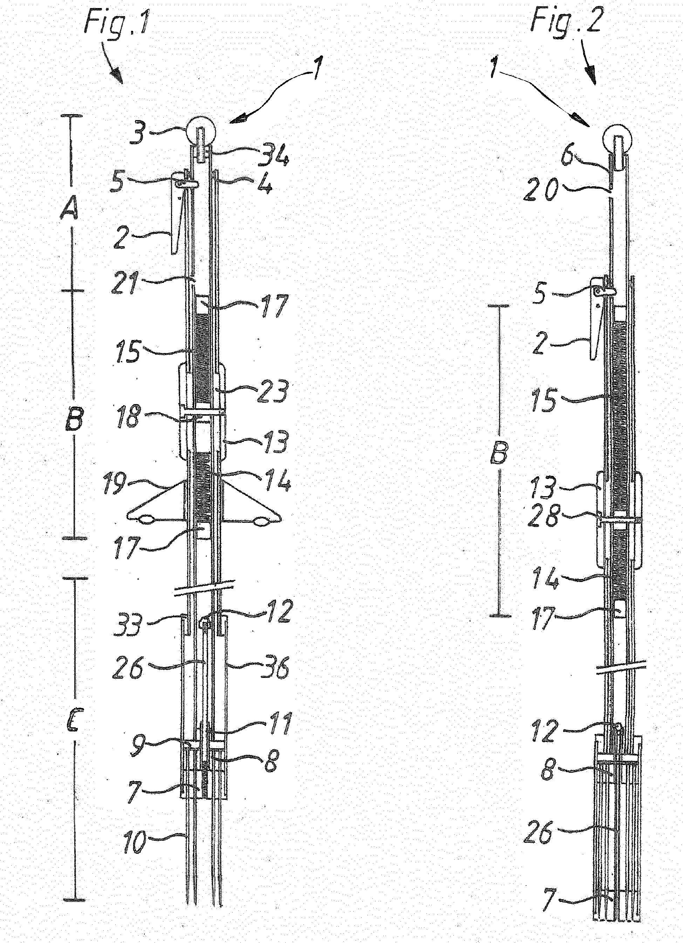

In Fig. 1 wird eine erfindungsgemäße Vorrichtung (1) zum Sammeln von Objekten, bevorzugt Nacktschnecken gezeigt. Die Vorrichtung (1) wird vom Benutzer in die erste vorgespannte Stiftposition gebracht um Objekte bzw. Nacktschnecken, die sich beispielsweise auf einem Rasenstück befinden, zu sammeln. Das Führungselement (4) hat hier die Form eines Stielrohrs. Innerhalb des Führungselements (4), befindet sich eine Stange (6), deren Ende mit einem Handgriff (3) versehen ist. Der Benutzer kann die Objekte bzw. die Nacktschnecken mit der erfindungsgemäßen Vorrichtung (1) besonders komfortabel sammeln, ohne dass sich der Benutzer dazu bücken oder niederknien müsste. Der Benutzer kommt mit den zu sammelnden Objekten, bevorzugt Nacktschnecken nicht in Hautkontakt. An der Stange (6) ist die Halterungsplatte (9) und der Halterungskopf (8) mit mehreren Stiften (10), die zueinander parallel sowie in gleichmäßigen Abstand voneinander angeordnet sind, mit der Verschraubung (11) befestigt. Das Betätigungsteil (2) weist einen Arretierungsstift (5) zum einrasten in die Arretierungsöffnungen (20) und (21) in der Stange (6) auf. Zwischen dem ersten, festen, oberen Anschlagselement (17) und dem beweglichen Anschlagselement (18) ist die Druckfeder (15) eingesetzt. Diese ist in der hier dargestellten ersten vorgespannten Stiftposition zusammengedrückt. Die Dämpfungsfeder (14) ist unterhalb des beweglichen Anschlagselements (18) und dem zweiten, festen, unteren Anschlagselement (17) in entspanntem Zustand abgebildet.

Um die Vorrichtung (1) in die in Fig. 1 dargestellte erste vorgespannte Stiftposition zu bringen muss der Benutzer den Arretierungsstift (5) des Betätigungsteils (2) aus der Arretierungsöffnungen (21) in der Stange (6) lösen. Anschließend wird die Stange (6) in das Führungselement (4) mittels des Handgriffs (3) hineingeschoben bis der Arretierungsstift (5) in die vorgesehene Arretierungsöffnungen (20) in der Stange (6) einrasten kann. Jetzt befindet sich die Vorrichtung (1) in der erste vorgespannte Stiftposition und alle Stifte (10) sind zur Aufnahme von Objekten bereit.

Zum Entleeren und Reinigen der Stifte (10) wird das Betätigungsteils (2) gedrückt und damit der Arretierungsstift (5) aus der Arretierungsöffnungen (20) gelöst und die Druckfeder (15) entspannt. Durch die Federkraft der Druckfeder (15) wird die Stange (6) mit den Stiften (10) automatisch hinter den Abstreifkopf (7) zurückgezogen. Die Dämpfungsfeder (14) bremst die Wucht der Druckfeder (15). Das Betätigungsteil (2) ist unterhalb des Handgriffs (3) am Führungselement (4) angebracht um eine Betätigung mit nur einer Hand zu ermöglichen. Optional ist eine Beleuchtungsvorrichtung (19) vorgesehen.

Fig. 2 zeigt die Vorrichtung (1) aus Fig. 1 in der Ruheposition. Diese Position wird automatisch nach Betätigen des Betätigungsteils (2) erreicht. Alternativ kann diese Position dadurch erreicht werden, dass die Stange (6) aus dem Führungselement (4) mittels des Handgriffs (3) soweit herausgezogen wird bis der Arretierungsstift (5) des Betätigungsteils (2) in der vorgesehenen Arretierungsöffnungen (21) in der Stange (6) eingerastet. Dadurch befinden sich die Stifte (10) im Inneren des untersten Teils des Führungselements (4) und die Spitzen der Stifte (10) schließen bündig mit der Unterkante des Abstreifkopfs (7) ab. In ihrer Ruheposition sind die Stifte (10) fixiert und die Vorrichtung (1) kann sicher gelagert oder transportiert werden. Eine mögliche Verletzungsgefahr durch die zugespitzten Stiftspitzen (25) ist in der in Fig. 2 gezeigten Ruheposition der Stifte (10) ausgeschlossen.

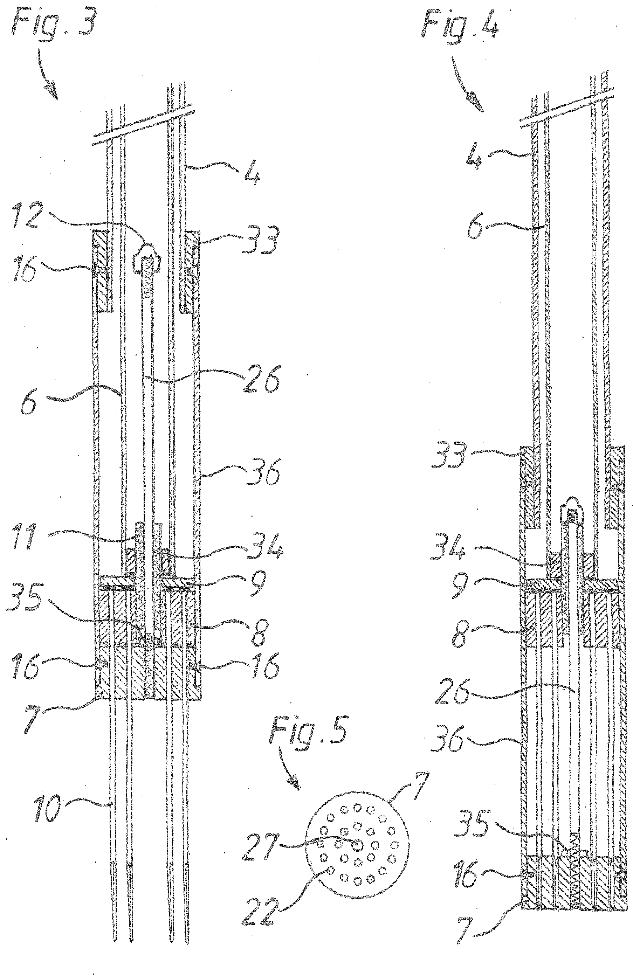

Fig. 3 zeigt vergrößert dargestellt den unteren Ausschnitt (Teil C) aus Fig. 1 vergrößert in einer Schnittansicht von der Seite einer erfindungsgemäßen Vorrichtung (1) in der erste vorgespannte Stiftposition. Die parallelen Stifte (10) sind jeweils voneinander im selben Abstand gleichförmig am Halterungskopf (8) angeordnet. Der Halterungskopf (8) ist dazu mit den entsprechenden Aussparungen zur Aufnahme der Stifte (10) versehen. Die Unterkante des Halterungskopfs (8) berührt die Oberkante des Auswurfkopfs (7). Der Gewindestift (26) und der Auswurfanschlag (12) sind maximal weit von den Stiftspitzen (25) entfernt. Der Abstreifkopf (7) wird mit der Befestigung (16) mit dem Gehäuse (36) verbunden. Die am Ende des Führungselements (4) befestigte Verbindungshülse (33) wird ebenfalls mit dem Gehäuse (36) verbunden. Am Ende der Stange (6) befindet sich eine Gewindebuchse (34) zur Aufnahme der Ausschubeinheit, welche den Halterungskopf (8), die Halterungsplatte (9), die Stifte (10), den Abstreifkopf (7), eine Verschraubung (11) mit Durchgangsbohrung und einen Gewindestift (26) mit Auswurfanschlag (12) und Kontermutter (35) umfasst.

Fig. 4 zeigt vergrößert dargestellt den unteren Ausschnitt (Teil C), die Position nach Auslösen des Betätigungsteils (2), welche der Ruheposition entspricht, in einer Schnittansicht von der Seite einer erfindungsgemäßen Vorrichtung. Die Stifte sind vollständig ins Innere des Abstreifkopfs (7) eingezogen.

Fig. 5 zeigt einen Ausschnitt aus Fig. 3 vergrößert dargestellt, eine Ansicht von unten auf einen Abstreifkopf (7). Der Abstreifkopf (7) hat 24 Aussparungen (22) zum Hindurchgleiten der Stifte (10) und eine mittlere Aussparung (27) zur Befestigung des Abstreifkopfs (7) am Gewindestift (26).

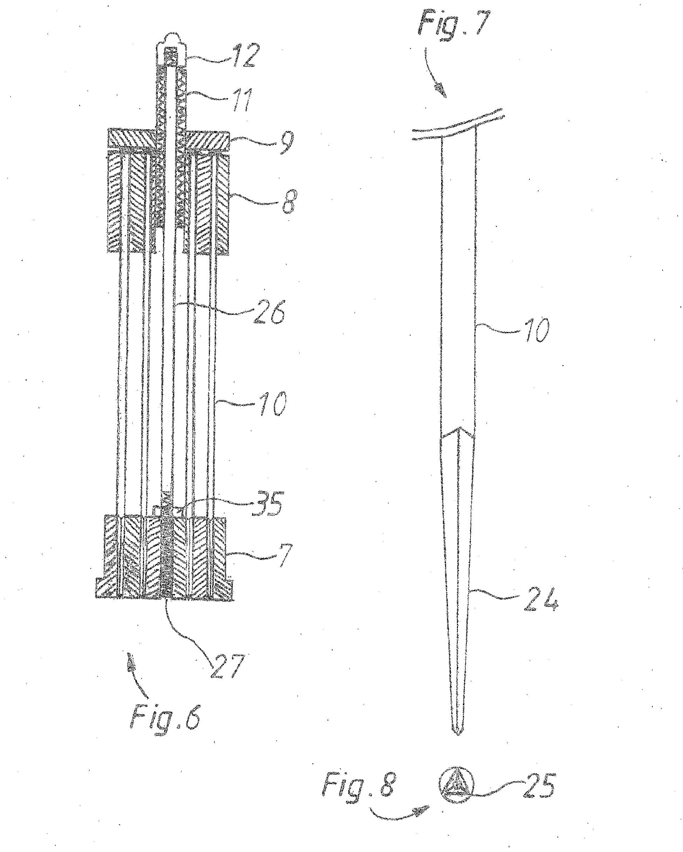

Fig. 6 zeigt einen Ausschnitt aus Fig. 4 vergrößert dargestellt in einer Schnittansicht von der Seite. Die dargestellte Ausschubeinheit umfasst einen Halterungskopf (8), eine Halterungsplatte (9), die Stifte (10), einen Abstreifkopf (7), eine Verschraubung (11) mit Durchgangsbohrung und einen Gewindestift (26) mit Auswurfanschlag (12) und Kontermutter (35). Zum Austausch eines Stifts (10) wird als erstes die Befestigung (16), bevorzugt eine Senkschraube, entfernt. Anschließend kann die o. g. Ausschubeinheit von der Stange (6) gelöst werden, bevorzugt in der Ruheposition (Fig. 2). Dadurch kann die Ausschubeinheit aus dem Gehäuse (36) herausgenommen werden. Nach dem Lösen der Halterungsplatte (9) vom Halterungskopf (8) können die Stifte (10) aus dem Halterungskopf (8) herausgenommen werden und durch neue Stifte (10) ersetzt werden.

Fig.7 zeigt einen Ausschnitt aus Fig. 6 vergrößert dargestellt in einer Schnittansicht von der Seite den unteren Teil eines Stifts (10) mit konisch angeschliffener Stiftspitzen (24).

Fig. 8 zeigt eine Ansicht von oben auf einen vergrößert dargestellten Stift (10) aus Fig. 6 mit konischem und gleichzeitigem Dreikantanschliff (25) der Stiftspitze.

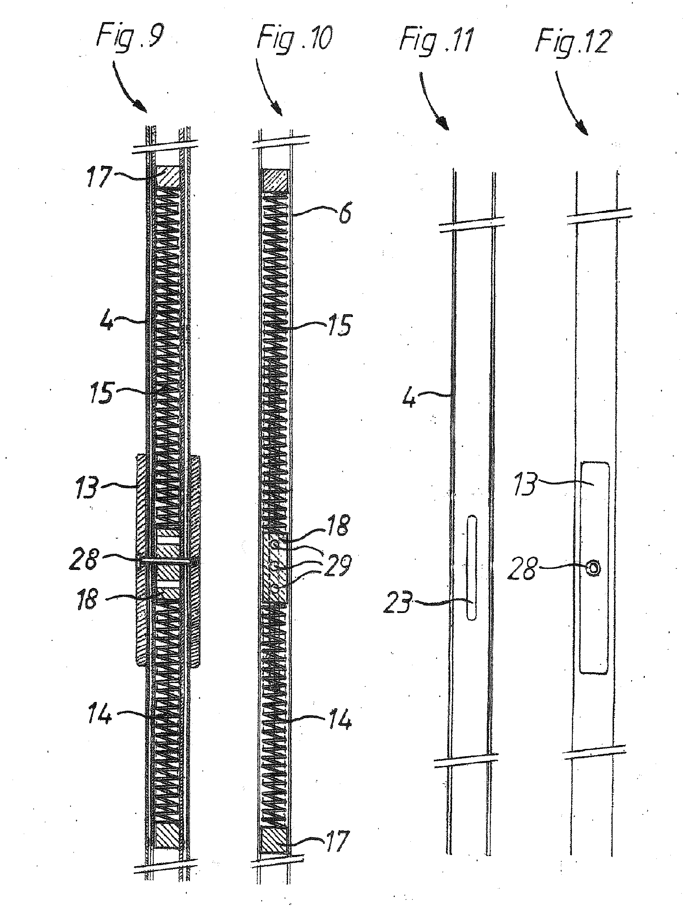

Fig. 9 zeigt den mittleren Ausschnitt (Teil B) aus Fig. 2 vergrößert dargestellt in einer Schnittansicht von der Seite einer erfindungsgemäßen Vorrichtung (1) in ihrer Ruheposition. Zwischen dem beweglichen Anschlagselement (18) und dem festen Anschlagselement (17) ist eine Druckfeder (15) eingesetzt. Unterhalb des beweglichen Anschlagselements (18) ist eine Dämpfungsfeder (14) eingesetzt. Die Fixierschraube (28) ist von einer Seite zuerst durch eine Fixierplatte (13) außerhalb des Führungselements (4), dann durch eine der Aussparungen (29) im beweglichen Anschlagselement (18) geführt und anschließend in der zweiten Fixierplatte (13) auf der gegenüberliegenden Seite außerhalb des Führungselements (4) fixiert. Durch Verschieben der Fixierplatten (13) nach oben oder unten kann der Federdruck der beiden Federn (14) und (15) reguliert werden.

Fig. 10 zeigt das um 90° gedrehte Detail aus Fig. 9, die Schnittansicht von der Seite die innere Stange (6), wobei sich die Vorrichtung in ihrer Ruheposition befindet. In dieser Ausführung sind drei Aussparungen (29) im beweglichen Anschlagselement (18) zum Durchführen der Fixierschraube (28), zur Einstellung der Federn (14) und (15) in den entsprechenden Positionen abgebildet.

Fig. 11 zeigt ein Detail aus Fig. 9, die Schnittansicht von der Seite des äußeren Führungselements (4). Durch die Aussparung (23) im Führungselement (4) wird die Fixierschraube (28) durchgeführt und kann nach oben und unten verschoben werden.

Fig. 12 zeigt das um 90° gedrehte Detail aus Fig. 9, die Schnittansicht von der Seite des äußeren Führungselements (4). Die Aussparung (23) im Führungselement (4) wird abgedeckt mit den Fixierplatten (13). Der Kopf der Fixierschraube (28) ist in der Mitte der Fixierplatte (13) gezeigt.

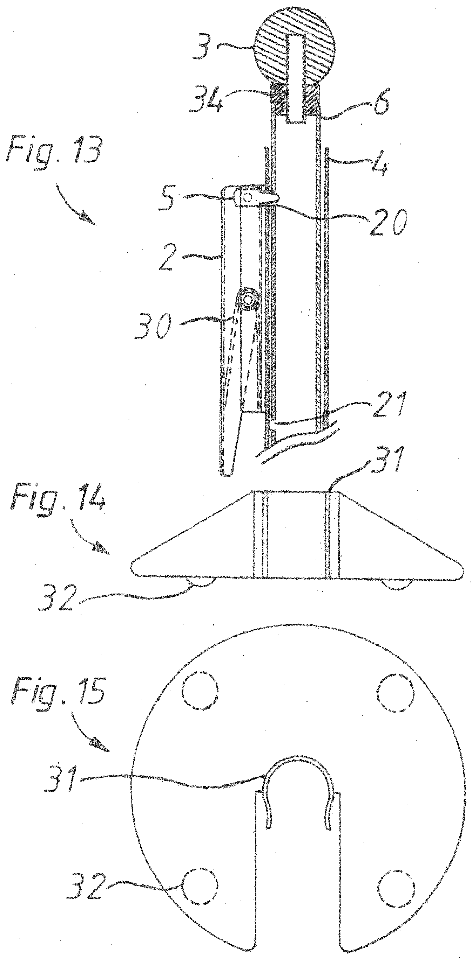

Fig. 13 zeigt den oberen Ausschnitt (Teil A) aus Fig. 1 vergrößert dargestellt in einer Schnittansicht von der Seite einer erfindungsgemäßen Vorrichtung (1) in ihrer ersten vorgespannten Stiftposition. Am Führungselement (4) ist zu dessen verschiebbaren Betätigung vorzugsweise ein Betätigungsteil (2) mit einer Rückstellfeder (30) vorgesehen. Der Arretierungsstift (5) ist in der Arretierungsöffnung (20) eingerastet. Durch Drücken des Bestätigungsteils (2) wird der Arretierungsstift (5) aus der Arretierungsöffnung (20) gelöst und gleitet außerhalb der Stange (6) entlang bis zur Arretierungsöffnung (21). Dabei wird auch die Druckfeder (15) schlagartig entspannt und drückt auf das bewegliche Anschlagselement (18) und damit auch die Dämpfungsfeder (14) zusammen. Diese dämpft somit einen oder mehrere Rückschläge der Druckfeder (15) bis sich die beiden Federkräfte der Dämpfungsfeder (14) und der Druckfeder (15) im Gleichgewicht befinden und die Ruheposition erreicht ist. In der Ruheposition hakt der Arretierungsstift (5) in die Arretierungsöffnung (21) ein. Zusätzlich befindet sich am oberen Ende der Stange (6) eine Gewindebuchse (34) zur Aufnahme des Handgriffs (3).

Fig. 14 zeigt die Beleuchtungsvorrichtung (19) vergrößert dargestellt in einer Ansicht von der Seite einer erfindungsgemäßen Vorrichtung (1) mit vier LED (32) und dem Klemmring (31).

Fig. 15 zeigt die Beleuchtungsvorrichtung (19) vergrößert dargestellt in einer Draufsicht von oben, mit vier LEDs (32) und dem Klemmring (31) zur Befestigung am Führungselement (4) wie in Fig.1 gezeigt.

### Bezugszeichen

1 Vorrichtung
2 Betätigungsteil
3 Handgriff
4 Führungselement
5 Arretierungsstift
6 Stange
7 Abstreifkopf
8 Halterungskopf
9 Halterungsplatte
10 Stift(e)
11 Verschraubung
12 Auswurfanschlag
13 Fixierplatten
14 Dämpfungsfeder
15 Druckfeder
16 Befestigung
17 Anschlagselement (fest)
18 Anschlagselement (beweglich)
19 Beleuchtungsvorrichtung
20 Arretierungsöffnung für die erste vorgespannte Stiftposition
21 Arretierungsöffnung für die Ruheposition
22 Aussparungen für Stifte (10) im Abstreifkopf (7)
23 Aussparungen im Führungselement (4)
24 konischer Anschliff des Stifts (10)
25 Dreikantanschliff des Stifts (10)
26 Gewindestift
27 mittlere Aussparung für die Aufnahme des Gewindestifts (26) im Abstreifkopf (7)
28 Fixierschraube
29 Aussparungen im beweglichen Anschlagselement (18) für die Aufnahme der Fixierschraube (28)
30 Rückstellfeder
31 Klemmring
32 LED
33 Verbindungshülse
34 Gewindebuchse
35 Kontermutter
36 Gehäuse

## Patentansprüche

1. Aufspießvorrichtung (1) zum Aufspießen von Objekten, insbesondere von Schnecken, umfassend mindestens einen spießartigen Stift, wobei der mindestens eine Stift (10) in Längsrichtung einer Stange (6) mittels einer Druckfeder (15) von einer ersten vorgespannten Stiftposition in eine zweite Stiftposition bewegbar ist, wobei ein Erreichen von zumindest der zweiten Stiftposition durch eine Dämpfungsfeder (14) gedämpft ist, wobei der mindestens eine Stift (10) mittels einer Halteplatte (9) an der Stange (6) befestigt ist, wobei sich die Stange (6) in einem Führungselement (4) befindet, wobei die Stange (6) an ihrem Ende mit einem Handgriff (3) versehen ist und die Stange (6) in das Führungselement (4) mittels des Handgriffs (3) hineinschiebbar ist, so dass die Stange (6) und das Führungselement (4) relativ zueinander verschiebbar sind, und wobei das Führungselement als Betätigungsmittel ausgebildet ist, so dass über die Relativbewegung zwischen Führungselement (4) und Stange (6) der mindestens eine Stift (10) in die erste Stiftposition vorspannbar ist, **dadurch gekennzeichnet, dass** an der Stange (6) ein erstes festes Anschlagselement (17) vorgesehen ist, das fest an der Stange (6) befestigt ist und einen feststehenden ersten Druckfederanschlag ausbildet, und an der Stange (6) ein zweites festes Anschlagselement (17) vorgesehen ist, das fest an der Stange (6) befestigt ist und einen feststehenden ersten Dämpfungsfederanschlag ausbildet, und weiterhin ein relativ zur Stange (6) bewegliches Anschlagselement (18) vorgesehen ist, das von einer ersten, die erste Stiftposition festlegenden Anschlagselementposition in eine zweite, die zweite Stiftposition festlegenden Anschlagselementposition bewegbar ist, und einen zweiten Druckfederanschlag und einen zweiten Dämpfungsfederanschlag ausbildet.

2. Aufspießvorrichtung (1) nach Anspruch 1, **dadurch gekennzeichnet, dass** in der zweiten Position sich die Federkraft der Dämpfungsfeder (14) und die Federkraft der Druckfeder (15) aufheben.

3. Aufspießvorrichtung (1) nach Anspruch 1 oder 2, **dadurch gekennzeichnet, dass** das bewegliche Anschlagselement (18) fest mit einem Betätigungsmittel verbunden ist, wobei das Betätigungsmittel dazu ausgelegt ist, das bewegliche Anschlagselement zu bewegen.

4. Aufspießvorrichtung (1) nach einem der vorhergehenden Ansprüche, **dadurch gekennzeichnet, dass** weiterhin ein Arretierungsmittel vorgesehen ist, um das bewegliche Anschlagselement (18) in der ersten Position zu arretieren.

5. Aufspießvorrichtung (1) nach Anspruch 4, **dadurch gekennzeichnet, dass** weiterhin ein Auslösemittel vorgesehen ist, das die Arretierung des beweglichen Anschlagselements (18) löst, wobei vorzugsweise das Arretierungsmittel und das Auslösemittel zusammenwirken.

6. Aufspießvorrichtung (1) nach einem der vorhergehenden Ansprüche, **dadurch gekennzeichnet, dass** die Stange (6) und das Führungselement (4) hohlzylindrisch ausgeführt sind und die Druckfeder (15) und die Dämpfungsfeder (14) innerhalb der Stange (6) angeordnet sind.

7. Aufspießvorrichtung (1) nach einem der vorhergehenden Ansprüche, **dadurch gekennzeichnet, dass** die Druckfeder und/oder die Dämpfungsfeder lose zwischen dem ersten und/oder dem zweiten feste Anschlagselement (17) und dem beweglichen Anschlagselement (18) angeordnet ist oder fest mit dem ersten und/oder dem zweiten feste Anschlagselement (17) und dem beweglichen Anschlagselement (18) verbunden ist.

8. Aufspießvorrichtung (1) nach einem der vorhergehenden Ansprüche, **dadurch gekennzeichnet, dass** ein Abstreifkopf (7) vorgesehen ist, mit mindestens eine Aussparungen (22), in der der mindestens eine Stift (10) geführt und zumindest teilweise aufgenommen ist, wobei der Abstreifkopf (7) mit der Stange (6) und/oder dem Führungselement (4) zusammenwirkt, so dass bei einer Bewegung des mindestens einen Stifts (10) von der ersten Position in die zweite Position, die Aussparung (22) an dem mindestens einen Stift (10) gleitet.

9. Aufspießvorrichtung (1) nach einem der vorhergehenden Ansprüche, **dadurch gekennzeichnet, dass** der mindestens eine Stift (10) pyramidenförmig ausgebildet ist, wobei vorzugsweise mindestens eine Kante des pyramidenförmigen Stifts (10) als Schneidkante ausgebildet ist.

10. Aufspießvorrichtung (1) nach einem der vorhergehenden Ansprüche, **dadurch gekennzeichnet, dass** die Aufspießvorrichtung (1) eine Beleuchtungsvorrichtung (19), bevorzugt im unteren Drittel des Führungselements (4) aufweist.

## Claims

1. Skewering device (1) for skewering objects, especially snails, including at least one skewer-like pin (10), wherein the at least one pin (10) is movable in longitudinal direction of a rod (6) by means of a compression spring (15) from a first preloaded pin position to a second pin position, wherein reaching at least the second pin position is damped by a damping spring (14), wherein the at least one pin (10) is attached to the rod (6) by a holding plate (9), wherein the rod (6) is located in a guiding element (4), wherein the rod (6) is provided at its end with a handle (3) and the rod (6) is slidable into the guiding element (4) by means of the handle (3) so that the rod (6) and the guiding element (4) are slidable relative to each other, and wherein the guiding element is configured as an actuating means so that, via the relative movement between the guiding element (4) and the rod (6), the at least one pin is preloadable into the first pin position, **characterized in that** a first fixed stopping element (17) is provided on the rod (6), which is fixedly attached to the rod (6) and forms a fixed first compression spring stop, and a second fixed stopping element (17) is provided on the rod (6), which is fixedly attached to the rod (6) and forms a fixed first damping spring stop, and furthermore a stopping element (18) movable relatively to the rod (6) is provided, which is movable from a first stopping element position defining the first pin position to a second stopping element position defining the second pin position and forms a second compression spring stop and a second damping spring stop.

2. Skewering device (1) according to claim 1, **characterized in that** the spring force of the damping spring (14) and the spring force of the compression spring (15) cancel each other out in the second position.

3. Skewering device (1) according to claim 1 or 2, **characterized in that** the movable stopping element (18) is fixedly connected to an actuating means, wherein the actuating means is configured to move the movable stopping element.

4. Skewering device (1) according to one of the preceding claims, **characterized in that** furthermore a locking means is provided to lock the movable stopping element (18) in the first position.

5. Skewering device (1) according to claim 4, **characterized in that** furthermore a releasing means is provided, which releases the locking of the movable stopping element (18), wherein preferably the locking means and the releasing means cooperate.

6. Skewering device (1) according to one of the preceding claims, **characterized in that** the rod (6) and the guiding element (4) are implemented hollow cylindrically, and the compression spring (15) and the damping spring (14) are arranged within the rod (6).

7. Skewering device (1) according to one of the preceding claims, **characterized in that** the compression spring and/or the damping spring is loosely arranged between the first and/or the second fixed stopping element (17) and the movable stopping element (18) or is fixedly connected with the first and/or the second fixed stopping element (17) and the movable stopping element (18).

8. Skewering device (1) according to one of the preceding claims, **characterized in that** a stripping head (7) is provided, with at least one recess (22) in which the at least one pin (10) is guided and at least partially received, wherein the stripping head (7) cooperates with the rod (6) and/or the guiding element (4) so that, during a movement of the at least one pin (10) from the first position to the second position, the recess (22) slides on the at least one pin (10).

9. Skewering device (1) according to one of the preceding claims, **characterized in that** the at least one pin (10) is formed pyramidally, wherein preferably at least one edge of the pyramidal pin (10) is configured as a cutting edge.

10. Skewering device (1) according to one of the preceding claims, **characterized in that** the skewering device (1) comprises a lighting device (19) preferably in the lower third of the guiding element (4).

## Revendications

1. Dispositif d'embrochement (1) destiné à embrocher des objets, en particulier des gastéropodes, comprenant au moins une tige de type broche, l'au moins une tige (10) étant mobile dans le sens longitudinal d'une barre (6), au moyen d'un ressort de compression (15), d'une première position de tige sollicitée à une seconde position de tige, l'atteinte d'au moins la seconde position de tige étant amortie par un ressort amortisseur (14), l'au moins une tige (10) étant fixée à la barre (6) au moyen d'une plaque de retenue (9), la barre (6) se trouvant dans un élément de guidage (4), la barre (6) étant pourvue, à son extrémité, d'une poignée (3) et la barre (6) pouvant être insérée dans l'élément de guidage (4) au moyen de la poignée (3), de telle sorte que la barre (6) et l'élément de guidage (4) peuvent être déplacés l'un par rapport à l'autre, et l'élément de guidage étant réalisé sous la forme d'un moyen d'actionnement de telle sorte que, par le mouvement relatif entre l'élément de guidage (4) et la barre (6), l'au moins une tige (10) peut être sollicitée dans la première position de tige, **caractérisé en ce qu'**un premier élément de butée (17) fixe est prévu sur la barre (6), lequel est fixé à demeure sur la barre (6) et forme une première butée fixe de ressort de compression, et un second élément de butée (17) fixe est prévu sur la barre (6), lequel est fixé à demeure sur la barre (6) et forme une première butée fixe de ressort amortisseur, et un élément de butée (18) mobile par rapport à la barre (6) est en outre prévu, lequel est mobile d'une première position d'élément de butée fixant la première position de tige à une seconde position d'élément de butée fixant la seconde position de tige, et forme une seconde butée de ressort de compression et une seconde butée de ressort amortisseur.

2. Dispositif d'embrochement (1) selon la revendication 1, **caractérisé en ce que**, dans la seconde position, la force élastique du ressort amortisseur (14) et la force élastique du ressort de compression (15) s'annulent.

3. Dispositif d'embrochement (1) selon la revendication 1 ou 2, **caractérisé en ce que** l'élément de butée (18) mobile est relié fixement à un moyen d'actionnement, le moyen d'actionnement étant conçu pour déplacer l'élément de butée mobile.

4. Dispositif d'embrochement (1) selon l'une des revendications précédentes, **caractérisé en ce qu'**un moyen de blocage est en outre prévu pour bloquer l'élément de butée (18) mobile dans la première position.

5. Dispositif d'embrochement (1) selon la revendication 4, **caractérisé en ce qu'**un moyen de libération est en outre prévu, lequel libère le blocage de l'élément de butée (18) mobile, le moyen de blocage et le moyen de déblocage coopérant de préférence l'un avec l'autre.

6. Dispositif d'embrochement (1) selon l'une des revendications précédentes, **caractérisé en ce que** la barre (6) et l'élément de guidage (4) sont réalisés de forme cylindrique creuse et le ressort de compression (15) et le ressort amortisseur (14) sont agencés à l'intérieur de la barre (6).

7. Dispositif d'embrochement (1) selon l'une des revendications précédentes, **caractérisé en ce que** le ressort de compression et/ou le ressort amortisseur sont agencés librement entre le premier et/ou le second élément de butée (17) fixe et l'élément de butée (18) mobile ou sont reliés fixement au premier et/ou au second élément de butée (17) fixe et à l'élément de butée (18) mobile.

8. Dispositif d'embrochement (1) selon l'une des revendications précédentes, **caractérisé en ce qu'**une tête de raclage (7) est prévue, dotée d'au moins un évidement (22), dans lequel l'au moins une tige (10) est guidée et au moins en partie reçue, la tête de raclage (7) coopérant avec la barre (6) et/ou l'élément de guidage (4) de telle sorte que, lors d'un mouvement de l'au moins une tige (10) de la première position à la seconde position, l'évidement (22) glisse sur l'au moins une tige (10).

9. Dispositif d'embrochement (1) selon l'une des revendications précédentes, **caractérisé en ce que** l'au moins une tige (10) est réalisée en forme de pyramide, au moins une arête de la tige (10) en forme de pyramide étant de préférence réalisée sous la forme d'une arête coupante.

10. Dispositif d'embrochement (1) selon l'une des revendications précédentes, **caractérisé en ce que** le dispositif d'embrochement (1) présente un dispositif d'éclairage (19), de préférence dans le tiers inférieur de l'élément de guidage (4).
